# EUROPEAN PATENT APPLICATION

(11) **EP 1 447 415 A1**
(43) Date of publication of application: **18.08.2004**
(21) Application number: 04250335.9
(22) Date of filing: 22.01.2004
(51) Int. Cl.: C08B 31/00, C08B 31/04, C08L 3/02

(54) **Curable starch composition, modified starch, preparation method and articles**

(30) Priority: 22.01.2003 JP 2003013468
(71) Applicant: Kansai Paint Co., Ltd, Amagasaki-shi, Hyogo-ken 661-0964 (JP)
(72) Inventor: Ohnishi, Kazuhiko, Hiratsuka-shi Kanagawa-ken 254-0016 (JP); Fujibayashi, Toshio, Hiratsuka-shi Kanagawa-ken 254-0016 (JP); Yamamoto, Yoichiro, Hiratsuka-shi Kanagawa-ken 254-0016 (JP)
(74) Representative: Stuart, Ian Alexander

(57) **Abstract**

A curable starch composition comprising a mixture of a starch and a curing agent having a functional group complementally reactive with at least one hydroxyl group contained in a starch molecule; and a modified starch having at least one substituent selected from the group consisting of a hydrocarbon group, acid group, blocked isocyanate group, isocyanate group, oxidative polymerizable group, radical polymerizable unsaturated group and amide group in a starch molecule.

## Description

The present invention relates to a curable starch composition, a modified starch, a preparation method by use of the curable starch composition or the modified starch, and an article obtained by the preparation method.

At present, plastics are used in various fields of living and industry in huge amounts. Most of the plastics are subjected to a waste disposal after use, resulting adverse influences on global environments. For the purpose of solving the above problems, recycling of plastics and application of biodegradable polymers are proposed. The field of the coating composition handling plastics has the same problems as above.

In the art, the coating composition, for example, the crosslinkable resin coating composition such as a melamine-curable resin coating composition, isocyanate-curable resin coating composition, oxidation-curable resin coating composition and the like, is coated onto a substrate, for example, a metal plate such as a steel plate, aluminum plate, iron plate and the like, wood, an inorganic material other than the above metals, for example, concrete, ceramics, glass and the like, plastics such as polyvinyl chloride, polyethylene terephthalate, polyethylene, nylon and the like, and the like for the purpose of imparting functions such as corrosion resistance, beautified appearance, durability, weather resistance, mar resistance and the like depending on properties of respective substrates.

A coating film formed onto the substrate as above may protect the surface of the substrate, resulting in that an old coating film after use may be subjected to disposal by peeling off, followed by incineration or disposal in the ground.

However, disposal by incineration may need a useless energy for incineration, and may accelerate a global tendency of becoming warmer due to carbon dioxide generated on incineration of the coating film, or may generate hydrogen chloride gas, depending on the kind of the coating film and may result an acid rain.

On the other hand, disposal in the ground may have such problems that guarantee of a land for disposal is difficult, that remaining of the coating film in the ground for a long period of time may result disruption of the natural environment or of an ecosystem.

As a biodegradable polymer for the purpose of solving the above problems, polylactic acid is well known in the art (see Handbook of Biodegradable Plastics, issued May 26, 1995, edited by Society for the Research of Biogradable Plastics, pages 279-291).

However, use of the polylactic acid as a resin component of the coating composition has such problems that a poor solubility in an organic solvent makes it impossible to use as a liquid coating composition, that formation of a coating film by dispersing into the organic solvent makes it impossible to form a coating film showing high gloss, that a low hardness of the coating film may result peeling off of the coating film by a slight power, or may develop mars on the coating film, resulting in making it impossible to use in place of the conventional coating film.

As a biodegradable polymer, starch is known in the art (see Handbook of Biodegradable Plastics, issued May 26, 1995, edited by Society for the Research of Biogradable Plastics, pages 122-129).

A starch containing a plasticizer is subjected in the art to fabrication such as casting, extrusion molding, mold fabrication, foam fabrication and the like to apply to a sheet, film, container, corn cup, rice cake, skin of a bean-jam-filled wafers and the like. However, application of the starch itself to a resin for a coating composition, adhesive, printing material, sheet material, molding and the like would be impossible, for example, due to poor water resistance, brittleness of a film or molded product due to absorption of water in a small amount, and poor properties in coating film hardness, mar resistance, adhesion properties to substrate, corrosion resistance and the like.

Polymerization of a starch molecule by subjecting a starch to a graft copolymerization reaction between the starch and a vinyl monomer, polycondensation reaction such as polyesterification, polyurethanization and the like, crosslinking reaction by use of polyisocyanate, polybasic acid and the like, is known in the art. However, the polymerized starch as above has such problems that a non-solubility in an organic solvent makes it impossible to obtain a liquid composition, and that use as a powder material without using the organic solvent makes it impossible to obtain a product showing good properties in smoothness and coating film performances, resulting in making difficult the application as the resin to the above uses.

Preferred embodiments of the present invention may provide a curable starch composition and a modified starch, which are capable of providing a coating film showing good properties in water resistance, corrosion resistance, weather resistance, durability and the like, and capable of providing an organic solvent based coating composition, a water based coating composition and a powder coating composition.

The present inventors made intensive studies for the purpose of solving the above problems to find out that use of a specified curable starch composition or a specified modified starch can solve all of the above problems, resulting in accomplishing the present invention.

The present invention firstly provides a curable starch composition comprising a mixture of a starch and a curing agent having a functional group complementally reactive with at least one hydroxyl group contained in a starch molecule.

The present invention secondly provides a modified starch having at least one substituent selected from the group consisting of a hydrocarbon group, acid group, blocked isocyanate group, isocyanate group, oxidative polymerizable group, radical polymerizable unsaturated group and amide group in a starch molecule.

Embodiments of the above modified starch may include the following:
(1) the above modified starch is a reactive modified starch having at least one substituent selected from the group consisting of an acid group, blocked isocyanate group, isocyanate group, oxidative polymerizable group, radical polymerizable unsaturated group and amide group,
(2) the above modified starch is a modified starch obtained by reacting a starch comprising the starch molecule and a compound having a functional group complementally reactive with at least one hydroxyl group contained in the starch molecule, and the hydroxyl group in the starch molecule is reacted with the reactive compound,
(3) the above modified starch is such that linkage formed by the above reaction of the hydroxyl group in the starch molecule with the reactive compound includes at least one linkage selected from an ester linkage, urethane linkage, urea linkage, amino linkage, and amide linkage,
(4) the above modified starch is dissolved or dispersed into an organic solvent,
(5) the above modified starch is dissolved or dispersed into a water based solvent,
(6) the above modified starch contains a curing catalyst and/or a curing promotor necessary for curing the modified starch,
(7) the above modified starch is at least one reactively curable modified starch selected from an oxidative polymerization curable one, cold curable one, heat curable one and actinic ray curable one,
(8) the above modified starch contains a colorant,
(9) the above modified starch is a resin for use in a coating material, adhesive material, printing material, sheet material, laminate material, or molding material, and
(10) the above modified starch is a reactive modified starch.

The present invention thirdly provides the following methods:
(1) a method of preparing a starch coating film, which method comprises forming a coating film onto a substrate by use of a coating material containing the above curable starch composition, or at least one of the above modified starches,
(2) a method of preparing a starch adhesive film, which method comprises forming an adhesive film onto a substrate by use of an adhesive material containing the above curable starch composition, or at least one of the above modified starches,
(3) a method of preparing a starch printing film, which method comprises forming a printing film onto a substrate by use of a printing material containing the above curable starch composition, or at least one of the above modified starches,
(4) a method of preparing a sheet, which method comprises forming a sheet by use of a sheet material containing the above curable starch composition, or at least one of the above modified starches,
(5) a method of preparing a laminate, which method comprises laminating by use of a laminate material containing the above curable starch composition, or at least one of the above modified starches, and
(6) a method of preparing a molded product, which method comprises molding by use of a molding material containing the above curable starch composition, or at least one of the above modified starches.

The present invention fourthly provides the following articles:
(1) a coated article obtained by the above method of preparing a starch coating film,
(2) an adhesive article obtained by the above method of preparing starch adhesive film,
(3) a printed article obtained by the above method of preparing a starch printing film,
(4) a sheet article obtained by the above method of preparing a sheet,
(5) a laminate article obtained by the above method of preparing a laminate, and
(6) a molded article obtained by the above method of preparing a molded product.

### Detailed Description of the Invention:

The curable starch composition of the present invention is a mixture of a starch and a curing agent having a functional group complementally reactable with at least one hydroxyl group contained in the starch molecule.

The above starch may include any ones known in the art.

The curing agent may include any known curing agents without particular limitations, so long as a curing agent having a functional group complementally reactable with a hydroxyl group including methylol group contained in the starch molecule is concerned.

The functional group complementally reactable with the hydroxyl group may include, for example, isocyanate group, acid anhydride group, acid group, amino group, amide group, imino group and the like.

The starch known in the art may include, for example, a ground-stem non-modified starch such as corn starch, high amylose starch, wheat starch, rice starch and the like, an underground-stem non-modified starch such as potato starch, tapioka starch and the like, and starch-substituted derivatives thereof, which are low-esterified, etherified, oxidized, acid-treated, or dextrinized. These may be used alone or in combination.

The curing agent may include any one used as the curing agent for use in the coating composition in the art, for example, polyisocyanate compound, blocked polyisocyanate, amino resin and the like.

The polyisocyanate compound may include a free isocyanate compound and blocked isocyanate compound.

The polyisocyanate compound having a free isocyanate group may include an organic diisocyanate itself including, for example, aliphatic diisocyanates such as hexamethylene diisocyanate, trimethylhexamethylene diisocyanate and the like, alicyclic diisocyanates such as xylene diisocyanate, isophorone diisocyanate and the like, aromatic diisocyanates such as tolylene diisocyanate, 4,4'-diphenylmethane diisocyanate and the like, and the like; adducts of respective organic diisocyanates in an excess amount with polyhydric alcohol, low molecular weight polyester resin, water or the like; polymers between respective organic diisocyanates, isocyanate-biuret adducts, and the like. Examples of typical trade names of the above polyisocyanate compound having free isocyanate group may include Burnock D-750, D-800, DN-950, DN-970, 15-455 (trade names, marketed by Dainippon Ink & Chemicals Inc., respectively), Desmodur L, Desmodur N, Desmodur HL, Desmodur N-3390 (trade names, marketed by Bayer Ltd., Germany, respectively), Takenate D-102, D-202, D-110, D-123N (trade names, marketed by Takeda Chemical Industries, Ltd., respectively), Coronate EH, Coronate L, Coronate HL, Coronate 203 (trade names, marketed by Nippon Polyurethane Industry Co., Ltd., respectively), Duranate 24A-90CX (trade name, marketed by Asahi Kasei Corporation), and the like. The polyisocyanate compound having blocked isocyanate group may include ones obtained by blocking the above free isocyanate group-having polyisocyanate compound with a known blocking agent such as oxime, phenol, alcohol, lactam, malonate, mercaptan and the like, and typical trade names thereof may include, for example, Burnock D-550 (trade name, marketed by Dainippon Ink and Chemicals Inc.), Takenate B-815-N (trade name, marketed by Takeda Chemical Industries, Ltd.), Additol (trade name, marketed by Hoechst AG, Germany), Coronate 2507 (trade name, marketed by Nippon Polyurethane Industry Co., Ltd.), and the like.

The amino resin may include, for example, ones obtained by condensation or cocondensation of melamine, benzoguanamine, urea, dicyandiamide and the like with formaldehyde.

A mixing amount of the curing agent is such that an amount of a functional group in the curing agent is in the range of 0.001 to 2 on an average, particularly 0.01 to 1.5 on an average per one hydroxyl group in the starch. When less than 0.01 on an average, film performances such as water resistance and the like may be reduced. on the other hand, when more than 2 on an average, biodegradability may be reduced.

The curable starch composition of the present invention may optionally contain a known colorant. The colorant may include an organic pigment, natural dyestuff and inorganic pigment.

The organic pigment may include a legal dyestuff pigment in accordance with Ordinance No. 37 of Ministry of Health and Welfare, mainly a tar dyestuff pigment. Examples thereof may include Red Color No. 202 (Lithol Rubine BCA), Red Color No. 203 (lake red C), Red Color No. 204 (lake red CBA), Red Color No. 205 (Lithol Red), Red Color No. 206 (Lithol Red CA), Red Color No. 207 (Lithol Red BA), Red Color No. 208 (Lithol Red SR), Red Color No. 219 (brilliant lake red R), Red Color No. 220 (deep maroon), Red Color No. 221 (toluidine red), Red Color No. 228 (permanent red), Orange Color No. 203 (permanent orange), Orange Color No. 204 (benzidine orange), Yellow Color No. 205 (benzidine yellow G), Red Color No..404 (brilliant fast scarlet), Red Color No. 405 (permanent red F5R), Orange Color No. 401 (hansa orange), Yellow Color No. 401 (hansa yellow), Blue Color No. 404 (phthalocyanine blue), and the like.

The natural dyestuff may include, for example, carotinoid series such as carotin, carotenal, capsanthin, lycopene, bixin, crocin, anthoxanthin and the like; flavonoid series including anthocyanidins such as shisonin, anthocyanin, isoflavone and the like, chalcones such as safrole yellow, safflower and the like, flavonols such as rutin, quercetin and the like, flavones such as cacao dyestuff and the like, and the like; flavin series such as riboflavin and the like; quinone series including anthraquinones such as laccaic acid, carminic acid (cochineal), keramesic acid, alizarin and the like, naphthoquinones such as shikonin, alkannin, echinochrome, and the like, and the like; polyphyline series such as chlorophyl, blood pigment and the like, diketene series such as curcumine (turmeric) and the like, betacyanidin series such as betanidine and the like.

The inorganic pigment may include, for example, silicic anhydride, magnesium silicate, talc, kaolin, bentonite, mica, titanium mica, bismuth oxychloride, zirconium oxide, magnesium oxide, zinc oxide, titanium oxide, light-duty calcium carbonate, heavy-duty calcium carbonate, light-duty magnesium carbonate, heavy-duty magnesium carbonate, yellow iron oxide, red oxide, black iron oxide, ultramarine, chromium oxide, chromium hydroxide, carbon black, calamine and the like.

A mixing amount of the colorant may arbitrarily be determined depending on uses and performances as required, but usually is in the range of 0.001 to 400 parts by weight, preferably 0.01 to 200 parts by weight per 100 parts by weight of the curable starch composition.

The curable starch composition of the present invention may optionally contain a known solvent, for example, an ester solvent, aromatic solvent, ketone solvent, aliphatic hydrocarbon solvent and the like. These solvents may be used alone or in combination.

The curable starch composition of the present invention may optionally contain additives contained in the coating composition, adhesive, printing material, sheet material, and molded product in the art, for example, color pigments other than the above, extender pigment, metallic pigment, colored pearl pigment, flowability controlling agent, anti-cissing agent, anti-sagging agent, ultraviolet light absorber, anti-oxidant, ultraviolet light stabilizer, matting agent, lustering agent, anti-corrosive agent, curing promotor, curing catalyst other than the above, anti-marring agent, defoamer and the like.

The modified starch of the present invention is explained hereinafter.

The modified starch of the present invention has at least one substituent selected from the group consisting of a hydrocarbon group, acid group, blocked isocyanate group, isocyanate group, oxidative polymerizable group, radical polymerizable unsaturated group and amide group in a starch molecule.

The starch used for modification may include the above-mentioned starch.

A hydrocarbon group-substituted modified starch is explained hereinafter.

The hydrocarbon group as the substituent can provide an effect of improving a solubility of the starch in an organic solvent, effect of improving compatibility with other resin or curing agent when mixed, effect of improving mechanical characteristics a coating film, molded product, sheet, adhesive film, and the like, and effects of imparting hydrophobic properties to the coating film, printing film, sheet, adhesive film, molded product and the like and improving durability such as water resistance, corrosion resistance, weather resistance and the like.

The modified starch having a hydrocarbon substituent is represented by the following structural formula (1): 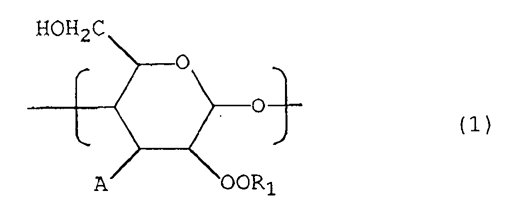 where R₁ includes alkyl group, cycloalkyl group, alkylene group and aryl group, and derivative groups thereof such as arylalkyl group, alkylaryl group, alkoxyalkyl group, optionally including an active hydrogen-containing group-introducing group such as hydroxyalkyl, aminoalkyl group and the like, the hydrocarbon group has preferably 2 to 24 carbon atoms, A represents hydroxyl group, -COR₁,-COR₆, -COR₇, -COR₈, - COR₉ and -COR₁₀, wherein -COR₁, -COR₆, -COR₇, -COR₈, -COR₉ and -COR₁₀ mean the same meaning as defined in the following.

In the above modified starch, R₁ may be arranged in the modified starch molecule as a whole in such manners that, for example, hydrocarbon groups selected from 2 to 24 carbon atoms may be arranged in a random state or blocked state, or short chain hydrocarbon groups selected from 2 to 4 carbon atoms in long chain hydrocarbon groups selected from 5 to 24 carbon atoms are arranged in a random state or blocked state respectively.

The modified starch having the hydrocarbon group may easily be synthesized by reacting alkylketone dimer, lyclic ester such as lactones, acid anhydride, acid halide or vinyl compound with hydrogen in the reactive hydroxyl group on the starch molecule in the presence of an acylifying or esterifying catalyst in a non-aqueous organic solvent.

The alkylketene dimer may include ones combined with various kinds of alkyl groups and may be represented by the following general formula (2): 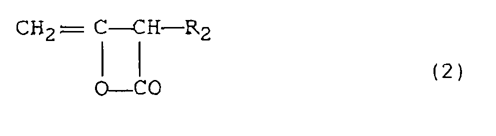 where R₂ is alkyl group, alkylene group, aryl group, derivatives thereof respectively having 5 to 17 carbon atoms.

The cyclic ester or caprolactones may include ε-caprolactone (C₆), γ-caprolactone (C₈), γ-laurolactone (C₁₂), γ-stearolactone (C₁₈), and large ring lactones represented by the general formula: (CH₂)ₙCOO, provided that n = 5-17. These may be used alone or in combination.

The acid anhydride and acid halide may include halides and anhydrides of capric acid (C₁₂), lauric acid (C₁₂), palmitic acid (C₁₆), stearic acid (C₁₈), oleic acid (C₁₈), and the like.

The vinyl compound may include a saturated or unsaturated aliphatic carboxylic acid vinyl ester such as vinyl acetate (C₂), vinyl propionate (C₃), vinyl butyrate (C₄), vinyl caproate (C₆), vinyl acrylate (C₃) , vinyl crotonate (C₄), vinyl caprylate (C₈), vinyl laurate (C₁₂), vinyl palmitate (C₁₆) , vinyl stearate (C₁₈) , vinyl oleate (C₁₈) and the like, a vinyl ester of an aromatic carboxylic acid such as vinyl benzoate, vinyl p-methylbenzoate and the like, and the like, and further include a branched saturated aliphatic carboxylic acid vinyl ester represented by the following structural formula (3): 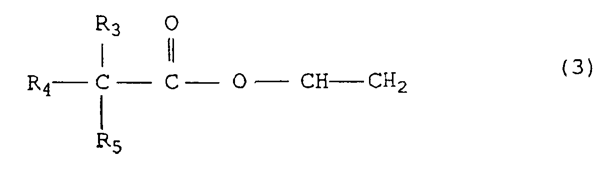 where R₃, R₄ and R₅ are all alkyl group, provided that a total carbon number is in the range of 4 to 16.

The non-aqueous organic solvent may include ones capable of dissolving the starch, specifically dimethyl sulfoxide (DMSO), dimethylformamide (DMF), pyridine and the like. These may be used alone or in combination, further in combination with other organic solvents.

The esterifying or acylifying catalyst may include a hydroxide, mineral acid salt, carbonate, organic compound of a metal belonging to first to fifth periods in the periodic table, alkali metal alkoxide, organic interlaminar transition catalyst and amino compound. These may be used alone or in combination. Specific examples thereof may include an alkali metal hydroxide such as sodium hydroxide, potassium hydroxide, lithium hydroxide and the like; an alkali metal organic acid salt such as sodium acetate, sodium p-toluenesulfonate and the like; an alkaline earth metal hydroxide such as barium hydroxide, calcium hydroxide and the like; an alkaline earth metal organic acid salt such as calcium acetate, calcium propionate, barium p-toluenesulfonate and the like; an inorganic acid salt such as sodium phosphate, calcium phosphate, sodium bisulfite, sodium carbonate, sodium bicarbonate, calcium carbonate, potassium bicarbonate, potassium sulfate, sodium aluminate, potassium zincate and the like; an ampholytic metal hydroxide such as aluminum hydroxide, zinc hydroxide and the like; an amino compound such as dimethylaminopyridine, diethylaminoacetic acid and the like; a quaternary ammonium compound such as N-trimethyl-N-propylammonium chloride, N-tetraethylammonium chloride and the like; and the like. A time and method to use these catalysts are not particularly limited.

A hydroxyl group remaining in the above modified starch makes it possible to mix a curing agent such as the above mentioned melamine resin, polyisocyanate or blocked polyisocyanate and the like with the remaining hydroxyl group.

A mixing ratio of the curing agent is such that the functional group in the curing agent is in the range of 0.001 to 2, particularly 0.01 to 1.5 on an average per one hydroxyl group in the starch. When less than 0.001 on an average, film performances such as water resistance and the like may be reduced. On the other hand, when more than 2 on an average, biodegradability may be reduced.

The modified starch having an acid group in the starch molecule in the present invention is explained hereinafter.

The acid group as the substituent may include carboxyl group, phosphate group, and the like, preferably carboxyl group. The acid group can be used as a hydrophilic group for dissolving or dispersing the modified starch into water.

The acid group has a substitution degree of 0.01 to 2.5, particularly 0.1 to 2.0.

A substitution degree less than 0.01 may reduce reactivity and water dispersibility. On the other hand, when more than 2.5, coating film performances may be reduced.

A modified starch containing an acid group such as carboxyl group, phosphate group and the like may optionally be neutralized with a basic compound such as an amine compound and the like and dissolved or dispersed into water to be used as an anionic water based coating composition including a water based electrodeposition coating composition. Crosslinking of the acid group in the modified starch with a curing agent such as polyepoxide and the like makes it possible to form a cured coating film showing good durability such as fabrication properties, water resistance, corrosion resistance, weather resistance and the like.

The modified starch containing the acid group may include a modified starch represented by the following structural formula (4): 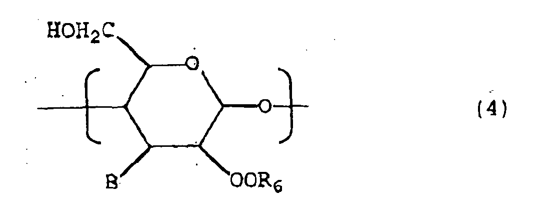 where R₆ represents an acid group-containing residual group reacted with the hydroxyl group in the starch, B represents hydroxyl group, -OOR₁, -OOR₆, -OOR₇, -OOR₈, -OOR₉, and -OOR₁₀, provided that -OOR₁, -OOR₆, -OOR₇, -OOR₈, -OOR₉ and -OOR₁₀ have the same meanings as defined above or hereinafter respectively.

The acid group-containing residual group is a residual group obtained by reacting an acid group-containing compound such as acid anhydride, polycarboxylic acid, phosphoric acid and the like with the hydroxyl group.

The polycarboxylic acid is a compound having at least two carboxyl groups in one molecule, and may include, for example, phthalic acid, tetrahydrophthalic acid, hexahydrophthalic acid, maleic acid, succinic acid, adipic acid, sebacic acid, trimellitic acid, pyromellitic acid, and the like. The acid anhydride may include an anhydrous acid thereof. In addition to the above, the polycarboxylic acid may include a polycarboxylic acid resin including an acrylic resin, polyester resin and the like.

Thus, the reaction of the hydroxyl group in the starch molecule with the compound reactable therewith makes it possible to introduce carboxyl group through an ester linkage.

The polyepoxide used as the curing agent may include, for example, a known epoxy resin having at least one epoxy group in one molecule, for example, a radical homopolymer of an epoxy group-containing radical polymerizable monomer such as 3,4-epoxycyclohexylmethyl (meth)acrylate, glycidyl (meth)acrylate and the like, a copolymer of the above monomer with other radical polymerizable monomer such as C₁₋₂₄ alkyl or cycloalkyl ester of (meth)acrylic acid, styrene and the like, Epolead GT300 (trade name, marketed by Daicel Chemical Industries, Ltd., trifunctional alicyclic epoxy resin), Epolead GT400 (marketed by Daicel Chemical Industries, Ltd., trade name, tetrafunctional alicyclic epoxy resin), EHPE (trade name, marketed by Daicel Chemical Industries, Ltd., trifunctional alicyclic epoxy resin), bisphenol type epoxy resin, novolak type epoxy resin, ε-caprolactam-modified bisphenol type epoxy resin, polyvinylcyclohexene diepoxide, Epikote 828, Epikote 1001, Epikote 1002, Epikote 1004, Epikote 1007 and Epikote 1009 (trade names, all marketed by Oil Shell Epoxy Co., Ltd., bisphenol A type epoxy resin) and the like.

A mixing ratio of the curing agent is such that a functional group in the curing agent is in the range of 0.001 to 2 on an average, particularly 0.01 to 1.5 on an average per one hydroxyl group in the starch. When less than 0.001 on an average, film performances such as water resistance may be reduced. On the other hand, when more than 2 on an average, biodegradability may be reduced.

An addition of a curing agent such as polyepoxide to the acid group-containing modified resin makes it possible to obtain a cured product.

The modified starch having isocyanate group or blocked isocyanate group in the present invention is explained hereinafter.

The modified starch containing isocyanate group or blocked isocyanate group may include a modified starch represented by the following structural formula (5): 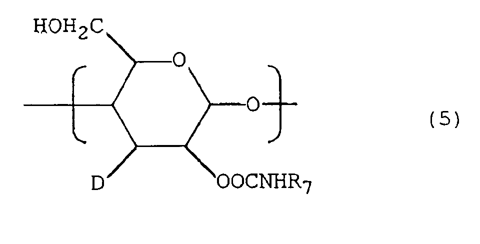 where R₇ is a residual group of an isocyanate group or blocked isocyanate group-containing polyisocyanate compound reacted with the hydroxyl group in the starch, D represents hydroxyl group, -OOR₁, -OOR₆, -OOR₇, -OOR₈, -OOR₉ and -OOR₁₀, provided that -OOR₁, -OOR₆, -OOR₇, -OOR₈, -OOR₉ and -OOR₁₀ have the same meanings as defined above or hereinafter respectively.

A combination of the isocyanate group or blocked isocyanate group with a hydroxyl group-containing compound, particularly a hydroxyl group-containing biodegradable resin such as starch, cellulose and the like makes it possible to form a cured coating film.

The isocyanate group or blocked isocyanate group has a substitution degree of 0.01 to 2.5, particularly 0.1 to 2.0. A substitution degree less than 0.01 may reduce reactivity, On the other hand, when more than 2.5, coating film performances may be reduced.

The isocyanate group-containing polyisocyanate compound may include the same ones as the above-mentioned optionally blocked polyisocyanate compound described as the curing agent having a functional group reactable with the hydroxyl group in the starch.

Thus, the reaction of the hydroxyl group in the starch with the compound reactable therewith makes it possible to introduce the optionally blocked isocyanate group through an urethane linkage.

The modified starch containing the optionally blocked isocyanate group may be mixed with a curing agent, for example, a polyol compound, polyol resin such as acryl polyol, polyester polyol, silicone polyol, starch and the like, and the like.

A mixing amount of the curing agent is such that an amount of a functional group in the curing agent is in the range of 0.001 to 2 on an average, particularly 0.01 to 1.5 on an average per one hydroxyl group in the starch. When less than 0.01 on an average, film performances such as water resistance and the like may be reduced. On the other hand, when more than 2 on an average, biodegradability may be reduced.

The modified starch having an oxidative polymerizable group in the starch molecule in the present invention is explained hereinafter.

The modified starch containing the oxidative polymerizable group may include, for example, a modified starch represented by the following structural formula (6): 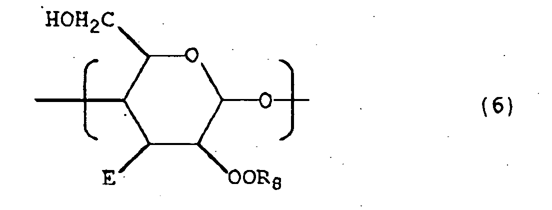 where R₈ is a residual group of an acid group and oxidative polymerizable group-containing compound reacted with the hydroxyl group in the starch, E represents hydroxyl group, - OOR₁, -OOR₆, -OOR₇, -OOR₈, -OOR₉ and -OOR₁₀, provided that - OOR₁, -OOR₆, -OOR₇, -OOR₈, -OOR₉ and -OOR₁₀ have the same meanings as defined above or hereinafter respectively.

The oxidative polymerizable group is a group selected from a non-conjugated double bonds and conjugated double bonds, and is such that, for example, mixing with a polymerization catalyst, followed by leaving to stand in the air, resulting in making it possible to form a cured coating film.

The oxidative polymerizable group has a substitution degree of 0.01 to 2.5, particularly 0.1 to 2.0. A substitution degree less than 0.01 may reduce reactivity. On the other hand, when more than 2.5, coating film performances may be reduced.

The oxidative polymerizable group-containing compound may include a compound containing, as a curing component, an unsaturated fatty acid crosslinked by air oxidative polymerization. An amount of the oxidative polymerizable group is such that an iodine value is preferably in the range of 35 to 90. An iodine value less than 30 may result unsatisfactory oxidative polymerizability and reduce curing properties. On the other hand, an iodine value more than 100 may reduce storage stability of the modified starch.

The unsaturated fatty acid may include a natural or synthetic unsaturated fatty acid, for example, an unsaturated fatty acid obtained from tung oil, linseed oil, castor oil, anhydrous castor oil, safflower oil, tall oil, soy bean oil, and palm oil.

Thus, the reaction of the hydroxyl group in the starch molecule with the compound reactable therewith makes it possible to introduce the oxidative polymerizable group through an ester linkage.

The above modified starch may contain a drying agent, specifically a metallic soap selected from a cobalt salt, manganese salt, zirconium salt, calcium salt, iron salt, lead salt, etc. of an aliphatic carboxylic acid such as oleic acid, and an alicyclic carboxylic acid such as naphthenic acid as a carrier.

A mixing amount of the drying agent is 0.001 to 20 parts by weight, preferably 0.1 to 10 parts by weight per 100 parts by weight of the modified starch. When less than 0.001 part by weight, film performances such as water resistance may be reduced. On the other hand, when more than 20 parts by weight, biodegradability may be reduced.

The modified starch having a radical polymerizable unsaturated group in the starch molecule in the present invention is explained hereinafter.

The radical polymerizable unsaturated group-containing modified starch may include a modified starch represented by the following structural formula (7): 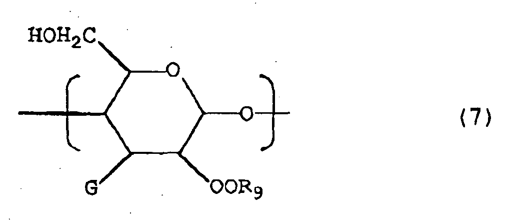 where R₉ is a residual group of a compound containing a reactive group having a functional group reactable with the hydroxyl group in the starch and a radical polymerizable unsaturated group, the reactive group may include, for example, carboxyl group, isocyanate group and the like, G represents hydroxyl group, -OOR₁, -OOR₆, -OOR₇, -OOR₈, -OOR₉ and -OOR₁₀, provided that -OOR₁, -OOR₆,-OOR₇, -OOR₈, -OOR₉ and -OOR₁₀ have the same meanings as defined above or hereinafter respectively.

The radical polymerizable unsaturated group may include a radical polymerizable unsaturated group such as vinyl group, acryloyl group, methacryloyl group, styryl group and the like, and makes it possible to cure, for example, by a curing catalyst such as a peroxide catalyst, or by actinic rays such as radiation, ultraviolet light, visible light and the like.

The radical polymerizable unsaturated group has a substitution degree of 0.01 to 2.5, particularly 0.1 to 2.0. A substitution degree less than 0.01 may reduce reactivity. On the other hand, when more than 2.5, coating film performances may be reduced.

The reactive group and radical polymerizable unsaturated group-containing compound may specifically include a monomer such as acrylic acid, methacrylic acid, N-methylol acrylamide, N-methylol methacrylamide, N-butoxymethylacrylamide, acrylisocyanate, acrylmethacrylate, vinyltrimethoxysilane, vinyltris (methoxyethoxy)silane, γ-methacryloyloxypropyl trimethoxysilane, γ-mercaptopropyl trimethoxysilane and the like.

The above compound may also include such a resin that a reactive group having a functional group reactable with hydroxyl group, for example, isocyanate group, isocyanate anhydride group, carboxyl group and the like, and radical polymerizable unsaturated group are introduced into a resin such as urethane resin, acrylic resin, alkyd resin, polyester resin, silicone resin, fluorocarbon resin, spiran resin, polyether resin, epoxy resin and the like. The radical polymerizable unsaturated group may include, for example, vinyl group, (meth)acryloyl group, styryl group, group due to maleic acid, and the like.

Thus, the reaction of the hydroxyl group in the starch molecule with the reactive compound makes it possible to introduce through the ester linkage and urethane linkage the radical polymerizable unsaturated group.

The above modified starch may contain a polymerization catalyst. Specific examples thereof may include a peroxide such as benzoyl peroxide.

A mixing amount of the polymerization catalyst is 0.001 to 20 parts by weight, preferably 0.1 to 10 parts by weight per 100 parts by weight of the modified starch. When less than 0.001 part by weight, film performances such as water resistance may be reduced. On the other hand, when more than 20 parts by weight, biodegradability may be reduced.

The modified starch having amide group in the starch molecule in the present invention is explained hereinafter.

The modified starch containing amide group may include a modified starch, for example, represented by the following structural formula (8): 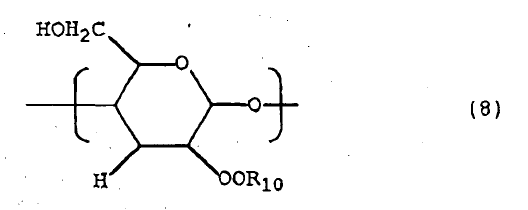 where R₁₀ is a residual group of a compound containing a reactive group having a functional group reactable with the hydroxyl group in the molecule and amide group, the reactive group may include, for example, carboxyl group, amide group and the like, H represents hydroxyl group, -OOR₁, -OOR₆, - OOR₇, -OOR₈, -OOR₉ and -OOR₁₀, provided that -OOR₁, -OOR₆, - OOR₇, -OOR₈, -OOR₉ and -OOR₁₀ have the same meanings as defined above or hereinafter respectively.

The amide group may be neutralized with an acid neutralizing agent such as acetic acid and dissolved or dispersed into water so as to be used as a cationic water based coating composition including a water based cationic electrodeposition coating composition. A combination thereof with a curing agent reactable with the amide group, for example, polyepoxide, polyacid and the like makes it possible to form a cured film.

The amide group has a substitution degree of 0.001 to 2.5, particularly 0.1 to 2.0. A substitution degree less than 0.001 may reduce reactivity. On the other hand, when more than 2.5, coating film performances may be reduced.

The reactive group and amide group-containing compound may specifically include a primary or secondary polyamine such as ethylenediamine, diethylenetriamine, hydroxyethylaminoethylamine, ethxlaminoethylamine, methylaminopropylamine, dimethylaminoethylamine, dimethylaminopropylamine and the like.

Thus, a reaction of the hydroxyl group in the starch molecule with the reactive compound makes it possible to introduce amino group through an amide linkage.

The modified starch having the amide group may contain a curing agent, for example, above-mentioned polyepoxide, polycarboxylic acid compound, resin and the like.

A mixing amount of the curing agent is such that a functional group in the curing agent is in the range of 0.001 to 2 on an average, particularly 0.01 to 1-5 per one hydroxyl group in the starch. When less than 0.001 on an average, film performances such as water resistance may be reduced. on the other hand, when more than 2 on an average, biodegradability may be reduced.

The substitution degree in the specification of the present invention is an average value of an amount of a substituted hydroxyl group per one starch molecule, and is such that a substitution degree 3 means that all of the hydroxyl groups in the starch is substituted with the above substituent and a substitution 0.01 means that one hydroxyl group in 100 starch molecules is substituted with the above substituent.

The modified starch of the present invention may be dissolved or dispersed into an organic solvent or an aqueous solvent to be used. An organic solvent used in an organic solvent based coating composition may include, for example, aliphatic solvent, aromatic solvent, ester solvent, ether solvent, ketone solvent, alcohol solvent, and mixed solvents thereof.

The modified starch of the present invention may be used in a solid state.

A solid modified starch may be used as a powder coating composition or a molding material. The powder coating composition may have a mean particle size in the range of 1 to 150 µm, particularly 2 to 100 µm. A powder coating method may include, for example, a fluidization dip coating method, electrostatic powder coating method, corona coating method, friction electrification coating method and the like.

In the modified starch of the present invention, in the case where the reactive modified starch is a curable composition, for example, an oxidative polymerization-curable modified starch containing the oxidative polymerizable group, a cold-curing modified starch containing the oxidative polymerizable group, amide group and the like, heat-curable modified starch containing the oxidative polymerizable group, amide group, acid group, radical polymerizable unsaturated group and the like, actinic ray-curable modified starch containing the radical polymerizable unsaturated group, and the like, curing may be carried out according to the curing equipments and curing conditions as known in art depending on respective curing types.

An example of the curing equipment and curing condition may include, for example, in the case of heat-curing, curing may be carried out by use of a hot-air drying oven, infrared rays, dryer, far infrared rays dryer, or combinations thereof.

In the case of the actinic rays-curing, a light irradiation source may include ones obtained from respective light sources, for example, electron beam, ultrahigh pressure, high pressure, medium pressure, low pressure mercury vapor lamps, chemical lamp, carbon arc lamp, xenone lamp, metal halide lamp, fluorescent lighting, tungsten lamp, sunlight and the like. Heat rays may include, for example, a semiconductor laser (830 nm), YAG laser (1.06 µm), infrared rays and the like.

The modified starch of the present invention may optionally contain additives contained in the coating composition, adhesive and printing material, for example, the above colorant, extender pigment, metallic pigment, colored pearl pigment, flowability controlling agent, anti-cissing agent, anti-sagging agent, ultraviolet light absorber, anti-oxidant, ultraviolet light stabilizer, matting agent, lustering agent, anti-corrosive agent, curing promotor other than the above, curing catalyst other than the above, anti-marring agent, defoamer, the above-mentioned solvent and the like.

Uses of the curable starch composition and modified starch of the present invention are explained hereinafter.

The curable starch composition and modified starch of the present invention may be partly or wholly used as a resin used in a coating material, adhesive material, printing material, sheet material, laminate material or molding material.

Explanations are given hereinafter on the case where the curable starch composition and modified starch (hereinafter may be referred to as "the starch material") of the present invention is used as a material such as the coating material, adhesive material, printing material and the like (hereinafter may be referred to as the coating material).

In the case where the starch material is partly used as the coating material, for example, the starch material may be mixed with the known non-curable coating material or curable coating material to be used.

Forms of the non-curable coating material and the curable coating material may include, for example, an organic solvent based coating material, water-dispersed coating material, water-soluble coating material, non-aqueous dispersed coating material, powder coating material and the like. The curable coating material may include a curable resin coating material such as an amino-curable resin coating material, isocyanate-curable resin coating material, acid-epoxy-curable resin coating material, hydrolizable silane-curable resin coating material, hydroxyl group-epoxy group-curable resin coating material, hydrazine-curable resin coating material, oxidative polymerization-curable resin coating material, photo(heat)-radical polymerization curable resin coating material, photo (heat)-cationic polymerization-curable resin coating material and combinations thereof.

The above coating material may contain an additive used in the field of the coating material, adhesive material, printing material and the like, for example, the above colorant, extender pigment, metallic pigment, colored pearl pigment, flowability controlling agent, anti-cissing agent, anti-sagging agent, ultraviolet light absorber, anti-oxidant, ultraviolet light stabilizer, matting agent, lustering agent, anti-corrosive agent, curing promotor, curing catalyst, anti-marring agent, defoamer, the above-mentioned solvent and the like.

A liquid starch material may be subjected to coating or printing by a roller coating, brushing, dip coating, spray coating such as non-electrostatic coating, electrostatic coating and the like, curtain flow coating, screen printing, letterpress printing and the like.

A powder starch material preferably has a mean particle size in the range of 1 to 150 µm, particularly 2 to 100 µm. A powder coating method may include, for example, fluidization dip coating method, electrostatic powder coating method, corona coating method, friction electrification coating method and the like.

A film formed from the starch material may have a dry film thickness in the range of about 1 to 200 µm on an average, particularly 2 to 150 µm.

In the starch material, the reactive modified starch is a curable material, for example, an oxidative polymerization-curable material, a cold-curing material, heat-curable material, actinic ray-curable material and the like, curing may be carried out according to the curing equipments and curing conditions as known in the art depending on respective curing types as above.

A substrated, onto which the starch material is coated or printed, may include, for example, metal, plastics, glass, earthenware, concrete, paper, fiber, wood, plant, rock, sand and the like.

The above plastics may preferably include, for example, the following biodegradable plastics.

The coated article of the present invention may include an article obtained by laminating a coating film formed by coating the coating composition or coating material of the present invention on the surface of the substrate.

In addition to the above, the present invention relates to a method of preparing a starch coating film, which comprises forming a coating film onto the above substrate by use of a coating material containing the curable starch composition or the modified starches, and to a coated article obtained by the method.

In addition to the above, the present invention relates to a starch adhesive film, which comprises forming an adhesive film onto the above substrate by use of an adhesive material containing the curable starch composition or the modified starches, and to an adhesive article.

The adhesive article may include, for example, an article in the form of a block material used in, for example, a promenade, prepared, for example, by collecting trees and leaves in the park.

In addition to the above, the present invention relates to a method of preparing a starch printing film, which comprises forming a printing film onto the above substrate by use of a printing material containing the curable starch composition or the modified starches, and to a printed article obtained by the method.

Explanation is given hereinafter on the case where the curable starch composition and modified starch (hereinafter may be referred to as the starch material) of the present invention is used as a resin used as the sheet material, laminate material or molding material.

The sheet material may include a sheet material used as a plastic sheet in articles for living as in containers, packings, transportation field, agricultural and marine fields, foods, domestic articles, health•amusement fields, and the like.

The sheet material may be prepared by a method which comprises subjecting a liquid starch material to the known casting method, extrusion molding, molding, foam molding and the like, or by a method which comprises subjecting a solid starch material to the known orientation process by use of a biaxial orientation machine.

The sheet material may contain an additive used in the field of the sheet material, for example, the above colorant, extender pigment, metallic pigment, colored pearl pigment, flowability controlling agent, anti-cissing agent, anti-sagging agent, ultraviolet light absorber, anti-oxidant, ultraviolet light stabilizer, matting agent, lustering agent, anti-corrosive agent, curing promotor, curing catalyst, anti-marring agent, defoamer, the above-mentioned solvent and the like.

The sheet material has a thickness in the range of 5 to 200 µm, preferably 10 to 100 µm. The above sheet may be prepared by a method which comprises subjecting the starch material of the present invention to an inflation method or T die casting method to form a film, optionally followed by subjecting to orientation processing so as to control a predetermined film thickness.

The sheet material may contain the colorant. The colorant to be used may be mixed with the starch material prior to the film-forming process.

The known coating material or printing material may be coated or printed onto the sheet material respectively- The coating material and the printing material may include the same ones as above mentioned in the present invention.

The above laminate material may include, for example, ones obtained by laminating the sheet materials of the present invention, ones obtained by laminating the sheet material of the present invention and other sheet material, ones obtained by laminating the sheet materials of the present invention onto the surface of a plastics molded product, and the like. Laminating may be carried out by a method of laminating by heat adhesion, or by a method of laminating by use of an adhesive.

The other sheet material may include any known sheets, but preferably a biodegradable sheet material other than in the present invention.

Specific examples of polymers for forming the biodegradable sheet may include the following polymers (a) to (k).
(a) A straight chain polyester (trade name, Biopol, marketed by Zeneca Group Plc.) of 3-hydroxy butyric acid and 3-hydroxy valeric acid. The straight chain polyester (Biopol) may be obtained by a sugar fermentation due to Aloaligenes Europhus.
(b) A lactic acid based biodegradable polymer prepared by polymerizing a lactic acid obtained by fermentation of glucose.
(c) A biodegradable polymer prepared from a natural polymer such as starch, polysaccharide, chitin and the like (for example, trade name, Pullulan, marketed by Hayashibara Co., Ltd.).
(d) A biodegradable polycaprolactone obtained by a ring opening polymerization of ε-caprolactone.
(e) A biodegradable polymer comprising polyvinyl alcohol or a modified product thereof (trade name, Vitex, marketed by Air Products and Chemicals Inc., U.S.A.).
(f) A biodegradable polymer such as polyether, polyacrylic acid, ethylene•carbon monooxide copolymer, aliphatic µpolyester•polyamide copolymer, aliphatic polyester·polyolefin copolymer, aliphatic polyester· aromatic polyester copolymer, aliphatic polyester·polyether copolymer and the like.
(g) A biodegradable polymer such as polylactic acid, polybutyric acid, polyglycolide, and derivatives thereof.
(h) A polymer alloy of starch with a modified polyvinyl alcohol (trade name, Mater-Bi, marketed by Novamont SpA, U.S.A.), etc.
(i) A polymer alloy of starch with polyethylene (trade name, Polygrade II, marketed by Ampaset Co., Ltd.; trade name, Polyclean, marketed by Archer-Daniel -Midland Co., Fed.).
(j) A polymer composition of silane starch and polyethylene (trade name, Ecostar, marketed by St. Lawrence Starch Co., Ltd.).
(k) A polymer alloy of polycaprolacton with polyethylene (trade name, Biomicron, marketed by JSP Co., Ltd.; trade name, Tone, marketed by Union Carbide, U.S.A.).

Disposal of the above biodegradable polymer based film in the ground may result that the film disposed in the ground may be decomposed into carbon dioxide and water by a microbial degradation due to microbes in the ground.

The above adhesive may include an adhesive mass such as silicone based ones, acrylic based ones, urethane based ones, natural rubber based ones, and the like.

The silicone based adhesive mass may include ones composed of a rubber component comprising a high polymerization degree polyorganosiloxane, and a resin component comprising a copolymer of [ (CH₃) ₃SiO_{1/2}] unit and [SiO₂] unit.

The acrylic based adhesive mass may include an acrylic copolymer of methacrylic acid alkyl ester and/or C₂₋₁₄ acrylic acid alkyl ester with an ethylenically unsaturated carboxylic acid.

The natural rubber based adhesive mass may include an adhesive mass composed of a mixture of the natural rubber with at least one adhesive-imparting resin selected from rosin, derivatives thereof such as hydrogenated rosin, disproportionation rosin, polymerized rosin, rosin ester and the like, terpene and derivatives thereof such as pinene resin, dipenten resin and hydrogenated products thereof. Of these, the natural rubber may be in the form of a solid or latex. The adhesive mass may contain the adhesive-imparting resin in an amount of 1 to 150 parts by weight per 100 parts by weight of the natural rubber.

Of these, a biodegradable natural rubber based adhesive mass is preferable. Use of the biodegradable adhesive mass may further reduce adverse influences on the natural environment.

The adhesive mass layer has an application amount in the range of 5 to 100 g/m², preferably 10 to 50 g/m².

The above molding material may include a molding material used in the plastics molded product in the fields of containers, domestic articles, industrial machines, living articles and the like.

The molding material is fabricated by a fabrication machine such as the known extrusion fabrication machine, mold-fabricating machine, injection molding fabrication machine, foam molding fabrication machine and the like.

The molding material include an additive used in the field of the molding material, for example, the above colorant, extender pigment, metallic pigment, colored pearl pigment, flowability controlling agent, anti-cissing agent, anti-sagging agent, ultraviolet light absorber, anti-oxidant, ultraviolet light stabilizer, matting agent, lustering agent, anti-corrosive agent, curing promotor, curing catalyst, anti-marring agent, defoamer, the above-mentioned solvent and the like.

The molding material may contain the above colorant. The colorant may be mixed with the starch material prior to fabrication.

The known coating material or printing material may be coated or printed onto a molded article obtained by use of the molding material of the present invention.

The coating material or printing material of the present invention may be used as the above coating material or printing material.

The known sheet, for example, the above biodegradable sheet or the sheet in the present invention may be coated onto the surface of the molded article by laminating or simultaneous fabrication.

The article of the present invention may be used in, for example, the electrical fields such as electrical parts, lightings, electrical elements, semiconductors, printings, printed circuits, electronic communications, electric powers and the like; physical fields such as instrumentations, optical field, indications, acoustic field, controllings, vending field, signals, information recording field, and the like; chemistry·metallurgy·fiber fields such as inorganic chemistry, organic chemistry, polymer chemistry, metallurgy, fiber and the like; treatment·transportation fields such as separation·mixing, metal processing, plastics processing, printings, containers, packings and the like; articles for living, for example, agricultural and marine fields, foods fermentations, domestic articles, health·amusement fields, and the like; mechanical engineering, and the like.

The present invention can provide the following particular effects.
1. The use of the hydrocarbon group-modified starch ester as a resin for use in a coating material can provide an effect of improving a solubility of the starch in an organic solvent, effect of improving compatibility with other resin or curing agent when mixed, effect of improving coating film performances such as coating film fabricating properties, and effects of improving hydrophobic properties to the coating film and improving durability such as water resistance, corrosion resistance, weather resistance and the like.
2. Crosslinking of the modified starch having at least one substituent selected from acid group, blocked isocyanate group, isocyanate group, oxidative polymerizable group, radical polymerizable unsaturated group and amide group as a reactive group by use of a curing agent having a functional group complementally reactable with the reactive group or catalyst makes it possible to form a cured coating film showing good properties in fabrication properties water resistance, corrosion resistance, weather resistance and the like.
3. A modified starch containing the acid group or amide group may optionally be neutralized with a basic compound or an acid compound and dissolved or dispersed into water to be used as an anionic water based coating material or coating composition, or as a cationic water based coating material or coating composition.

### Example

The present invention is explained more in detail by reference to the following Examples. The present invention should not be limited to the Examples, in which "part" and "%" represent "part by weight" and "% by weight" respectively. Preparation Example 1

### (Preparation of Modified Starch 1)

Into 200 g of dimethylsulfoxide (DMSO) was suspended 25 g of high amylose corn starch, followed by heating up to 90°C with agitation, keeping at that temperature for 20 minutes to be gelatinized, adding 20 g of sodium bicarbonate as a catalyst to the gelatinized solution, adding 17 g of vinyl laurate (C₁₂) while keeping at 90°C, reacting at that temperature for one hour, adding 37 g of vinyl acetate (C₂), reacting at 80°C for one hour, casting the reacting reacted solution, and successively subjecting to high speed agitation-grinding and filtration dehydration drying to obtain a starch ester as modified starch 1. The modified starch 1 had an aliphatic group substitution degree of 2.45. Preparation Example 2

### (Preparation of Modified Starch 2)

Preparation Example 1 was duplicated except that 16 g of stearic acid chloride (C₁₈) was used in place of vinyl laurate to obtain a starch ester as modified starch 2, which had an aliphatic group substitution degree of 2.45. Preparation Examples 3-8

### (Preparation of Modified Starches 3-8)

The high amylose corn starch and a modifying compound as shown in the following Table 1 were reacted so that the substitution degree may be as shown in the following Table 1 to obtain modified starches 3-8 containing a reactive group respectively.

Details of the above modified starches 1-8 are shown in the following Table 1.

**Table 1**

| | modifying compound | substituent | modified starch | | | | | | | |
|---|---|---|---|---|---|---|---|---|---|---|
| | | | 1 | 2 | 3 | 4 | 5 | 6 | 7 | 8 |
| Aliphatic group substitution degree | (a) | ① | 2.4 | | 2.4 | 2.4 | 2.4 | 2.4 | 2.4 | 0 |
| | (b) | ② | | 2.4 | | | | | | |
| Reactive group substitution degree | (c) | ③ | | | 0.1 | | | | | |
| | (d) | ④ | | | | 0.1 | | | | |
| | (e) | ⑤ | | | | | 0.1 | | | |
| | (f) | ⑥ | | | | | | 0.1 | | |
| | (g) | ⑦ | | | | | | | 0.1 | |

In Table 1, the codifying compound is as follows respectively.
(a) vinyl laurate and vinyl acetate.
(b) stearic acid chloride and vinyl acetate.
(c) vinyl laurate and acrylic acid.
(d) vinyl laurate and maleic anhydride.
(e) vinyl laurate and methacrylisocyanate.
(f) vinyl laurate and tall oil fatty acid.
(g) vinyl laurate and ε-caprolactam-blocked hexamethylene diisocyanate.

In Table 1, the substituent is as follows respectively.
① lauryl group and acetic acid residual group.
② stearyl group and acetic acid residual group.
③ stearyl group and carboxyl group.
④ stearyl group and carboxyl group.
⑤ stearyl group and methacryl group.
⑥ stearyl group and oxidative polymerizable group.
⑦ stearyl group and s-caprolactam-blocked isocyanate group.

### Examples 1-4

As shown in the following Table 2, modified starch 1 or 2 was mixed with coating composition (a) or (b), or curing agent (a) to obtain a curable coating composition of Examples 1-4 respectively.

### Comparative-Example 1

A coating composition prepared by dissolving modified starch 1 into xylone was used.

Respective coating compositions of Examples 1-4 and Comparative Example 1 were coated onto a zinc phosphate-treated steel plate so as to be a dry film thickness of 60 µm, followed by heat curing at 160°C for 30 minutes.

Results are shown in the following Table 2.

**Table 2**

| | | Examples | | | | Comparative Example 1 |
|---|---|---|---|---|---|---|
| | | 1 | 2 | 3 | 4 | |
| Formulation | modified starch | 1 | 2 | 1 | 1 | (non-modified) 8 |
| | amount (part) | 100 | 100 | 100 | 100 | (non-modified) 100 |
| | Coating composition (a) | 100 | 100 | | | |
| | Coating composition (b) | | | 100 | | |
| | Curing agent (a) | | | | 20 | |
| Appearance and performances | Gloss | ○ | ○ | ○ | ○ | Δ |
| | Smoothness | ○ | ○ | ○ | ○ | Δ |
| | Hardness | ○ | ○ | ○ | ○ | Δ |
| | Adhesion properties | ○ | ○ | ○ | ○ | × |
| | Impact resistance | ○. | ○ | ○ | ○ | × |
| | Solvent resistance | ○ | ○ | ○ | ○ | × |
| | Flexing properties | ○ | ○ | ○ | ○ | × |

### Formulation

Coating composition (a): hydroxyl group-containing polyester resin (hydroxy value 200 mg KOH/g)/hexamethoxymelamine resin = 80/20 (weight ratio).

Coating composition (b): hydroxyl group-containing acrylic resin (hydroxy value 200 mg KOH/g)/hexamethoxymelamine resin = 80/20 (weight ratio).

Curing agent (a): hexamethylene diisocyanate.

### Test method

Gloss: Gloss was visually evaluated as follows.
○: good, Δ: hazy and slightly poor, ×: poor. Smoothness: smoothness was visually evaluated as follows.
○: good in smoothness, Δ: slightly poor in smoothness, ×: seriously poor in smoothness.

Hardness: Evaluation was made based on the pencil method defined in JIS K-500 (scratch method) .

### Adhesion properties:

In accordance with JIS K-5600, 100 of 1 mm square was formed on coating film, followed by adhering an adhesive cellophane tape on the surface of the squares, strongly peeling the tape to examine a number of squares remaining without being peeled off, and evaluating as follows. ○: remaining squares 100, Δ: remaining squares 99-50, ×: remaining squares 49 or less.

### Impact Resistance:

Impact was given onto the coated surface of a coated sheet under the conditions of a falling weight of 1000 g, a diameter of a pointed end of a shock mold of 1/2 inch and a falling height of 50 cm in accordance with Dupont impact tester in JIS K-5600 (1990), followed by adhering an adhesive cellophane tape onto the area where the impact was given, immediately thereafter peeling off the tape to evaluate a degree of peeling off. the film as follows.
○: No peeling is observed. Δ: Development of peeling is slightly observed. ×: Remarkable development of peeling is observed.
Flexing properties: A test panel was cut to a size of 20 X 150 mm, followed by bending at an angle of 180° at an atmospheric temperature of 20°C so that the test panel may be wound around a steel cylinder having a diameter of 25.4 mm with a coating surface facing outside, followed by evaluating as follows.
○: Nothing abnormal, Δ: Crazes developed, ×: Neither cracking nor peeling developed.

### Solvent Resistance:

The surface of a coating film was wiped reciprocally 10 times with a gauz impregnated with xylene, followed by visually evaluating appearance as follows.
○: Nothing abnormal on the surface, showing good curing properties, Δ: slight mars on the surface, showing poor curing properties, ×: Dissolution takes place on the surface, showing seriously poor curing properties.

### Examples 5-9

Respective curable coating compositions of Examples 5-9 were prepared according to the formulation by use of modified starches 3-7 as shown in the following Table 3.

Respective coating compositions of Examples 5-9 and Comparative Example 1 were coated onto a zinc phosphate-treated steel plate so as to be a dry film thickness of 60 µm. Curing conditions are as in Table 2. Results are shown in the following Table 3.

**Table 3**

| | | Examples | | | | | Comparative Example 1 |
|---|---|---|---|---|---|---|---|
| | | 5 | 6 | 7 | 8 | 9 | |
| Formulation Formulation | modified starch | 3 | 4 | 5 | 6 | 7 | (non-modified) B |
| | amount (part) | 100 | 100 | 100 | 100 | 100 | (non-modified) 100 |
| | Curing agent (a) | 10 | 10 | | | | |
| | Catalyst (a) | | | | 1 | | |
| Curing conditions | | (1) | (1) | (2) | (3) | (1) | (1) |
| Appearance and performances | Gloss | ○ | ○ | ○ | ○ | ○ | Δ |
| | Smoothness | ○ | ○ | ○ | ○ | ○ | Δ |
| | Hardness | ○ | ○ | ○ | ○ | ○ | Δ |
| | Adhesion pxoperties | ○ | ○ | ○ | ○ | ○ | × |
| | Impact resistance | ○ | ○ | ○ | ○ | ○ | × |
| | Solvent resistance | ○ | ○ | ○ | ○ | ○ | × |
| | Flexing properties | ○ | ○ | ○ | ○ | ○ | × |

### Formulation

Curing agent (a): bisphenol diglycidyl ether.

Catalyst (a): cobalt stearate.

### Curing conditions

(1) 160°C and 30 minutes.
(2) ultraviolet light irradiation: 30 seconds
(3) 20°C and 7 days

## Claims

1. A curable starch composition comprising a mixture of a starch and a curing agent having a functional group complementally reactive with at least one hydroxyl group contained in a starch molecule.

2. A modified starch having at least one substituent selected from the group consisting of a hydrocarbon group, acid group, blocked isocyanate group, isocyanate group, oxidative polymerizable group, radical polymerizable unsaturated group and amide group in a starch molecule.

3. A modified starch as claimed in claim 2, wherein the modified starch is a reactive modified starch having at least one substituent selected from the group consisting of an acid group, blocked isocyanate group, isocyanate group, oxidative polymerizable group, radical polymerizable unsaturated group and amide group.

4. A modified starch as claimed in claim 2 or 3, wherein said modified starch is a modified starch obtained by reacting a starch comprising the starch molecule and a compound having a functional group complementally reactive with at least one hydroxyl group contained in the starch molecule, and the hydroxyl group in the starch molecule is reacted with the reactive compound.

5. A modified starch as claimed in any one of claims 2 to 4, wherein linkage formed by the reaction of the hydroxyl group in the starch molecule with the reactive compound includes at least one linkage selected from an ester linkage, urethane linkage, urea linkage, amino linkage, and amide linkage.

6. A modified starch as claimed in any one of.claims 2 to 5, wherein the modified starch is dissolved or dispersed into an organic solvent.

7. A modified starch as claimed in any one of claims 2 to 5, wherein the modified starch is dissolved or dispersed into a water based solvent.

8. A modified starch as claimed in.any one of claims 2 to 5, wherein the modified starch is a powder.

9. A modified starch as claimed in any one of claims 2 to 8, wherein the modified starch contains a curing catalyst and/or a curing promotor necessary for curing the modified starch.

10. A modified starch as claimed in any one of claims 2 to 8, wherein the modified starch is at least one reactively curable modified starch selected from an oxidative polymerization curable one, cold curable one, heat curable one and actinic ray curable one.

11. A modified starch as claimed in any one of claims 1 to 10, wherein the modified starch contains a colorant.

12. A modified starch as claimed in any one of claims 1 to 11, wherein the modified starch is a resin for use in a coating material, adhesive material, printing material, sheet material, laminate material or molding material.

13. A modified starch as claimed in any one of claims 1 to 12, wherein the modified starch is a reactive modified starch.

14. A method of preparing a starch coating film, which method comprises forming a coating film onto a substrate by use of a coating material containing the curable starch composition as claimed in claim 1, or a modified starch selected from modified starches as claimed in claims 2 to 13.

15. A method of preparing a starch adhesive film, which method comprises forming an adhesive film onto a substrate by use of an adhesive material containing the curable starch composition as claimed in claim 1, or a modified starch selected from modified starches as claimed in claims 2 to 13.

16. A method of preparing a starch printing film, which method comprises forming a printing film onto a substrate by use of a printing material containing the curable starch composition as claimed in claim 1, or a modified starch selected from modified starches as claimed in claims 2 to 13.

17. A method of preparing a sheet, which method comprises forming a sheet by use of a sheet material containing the curable starch composition as claimed in claim 1, or a modified starch selected from modified starches as claimed in claims 2 to 13.

18. A method of preparing a laminate, which method comprises laminating by use of a laminate material containing the curable starch composition as claimed in claim 1, or a modified starch selected from modified starches as claimed in claims 2 to 13.

19. A method of preparing a molded product, which method comprises molding by use of a molding material containing the curable starch composition as claimed in claim 1, or a modified starch selected from modified starches as claimed in claims 2 to 13.

20. A coated article obtained by the method as claimed in claim 14.

21. An adhesive article obtained by the method as claimed in claim 15.

22. A printed article obtained by the method as claimed in claim 16.

23. A sheet article obtained by the method as claimed in claim 17.

24. A laminate article obtained by the method as claimed in claim 18.

25. A molded article obtained by the method as claimed in claim 19.
